Europäisches Patentamt

European Patent Office

Office européen des brevets

(19)

(11) Numéro de publication: **0 229 556 B1**

# (12) FASCICULE DE BREVET EUROPEEN

(45) Date de publication de fascicule du brevet:
**21.11.91**

(51) Int. Cl.⁵: **B60P 3/36**

(21) Numéro de dépôt: **86402694.3**

(22) Date de dépôt: **04.12.86**

(54) **Ensemble d'éléments coordonnés permettant la transformation d'un véhicule de type mini-fourgon en auto-caravane.**

(30) Priorité: **05.12.85 FR 8517989**

(43) Date de publication de la demande:
**22.07.87 Bulletin 87/30**

(45) Mention de la délivrance du brevet:
**21.11.91 Bulletin 91/47**

(84) Etats contractants désignés:
**BE DE ES FR GB IT NL**

(56) Documents cités:
**DE-A- 2 938 892**
**FR-A- 1 390 288**
**US-A- 2 867 471**
**US-A- 4 375 306**

(73) Titulaire: **Desombre, Patrick**
**41, rue Joseph de Maistre**
**F-75018 Paris(FR)**

Titulaire: **Claude, Thierry**
**3, rue Henri Chevreau**
**F-75020 Paris(FR)**

(72) Inventeur: **Desombre, Patrick**
**41, rue Joseph de Maistre**
**F-75018 Paris(FR)**
Inventeur: **Claude, Thierry**
**3, rue Henri Chevreau**
**F-75020 Paris(FR)**

EP 0 229 556 B1

Rank Xerox (UK) Business Services

## Description

L'invention concerne un ensemble d'éléments coordonnés permettant la transformation d'un véhicule de type mini-fourgon en auto-caravane et s'applique particulièrement aux véhicules dont l'arrière comprend soit un hayon, soit deux portes montées sur charnière autour d'axes verticaux ou horizontaux (comme il est connu par exemple dans les documents US-A-4 375 306 ou FR-A-1 390 288).

Il existe déjà des véhicules qui ont été spécialement conçus pour être utilisés en auto-caravane et qui sont livrés à la clientèle soit avec un aménagement complet, soit avec un aménagement limité que l'utilisateur peut compléter à sa guise. L'inconvénient de ces véhicules est essentiellement leur prix relativement élevé.

On a également proposé des techniques permettant de surélever et/ou de prolonger l'espace intérieur d'un véhicule de tourisme, pour permettre son utilisation en auto-caravane. Cependant, ces techniques nécessitent de transformer la carosserie du véhicule et sont coûteuses.

L'invention pour objet un ensemble d'éléments coordonnés permettant d'aménager un véhicule du type mini-fourgon à ouverture arrière en auto-caravane, sans aucune modification de carosserie, de telle sorte que le véhicule puisse être utilisé aussi bien dans sa version d'origine que dans sa version auto-caravane, la transformation ne nécessitant que quelques minutes et pouvant être effectuée par une seule personne.

L'invention propose à cet effet un ensemble d'éléments coordonnés permettant la transformation d'un véhicule de type mini-fourgon à ouverture arrière en auto-caravane, caractérisé en ce qu'il comprend deux caissons longitudinaux destinés à être placés le long des côtés du véhicule et un élément central placé entre les caissons longitudinaux et les reliant entre eux, des éléments plans étant montés coulissants par rapport aux caissons longitudinaux et à l'élément central précité pour être déplaçables entre une position de rangement où ils sont escamotés à l'intérieur du véhicule et une position de service où ils s'étendent à l'arrière de véhicule, extérieurement à celui-ci et constituent le plateau d'une table et deux bancs placés de part et d'autre de ce plateau.

Ainsi, il suffit de tirer les éléments plans coulissants en position de service pour disposer d'une table et de deux bancs placés à l'extérieur du véhicule, dans le prolongement de celui-ci. Il suffit de les faire coulisser vers l'avant du véhicule pour les ranger entièrement à l'intérieur de celui-ci, la ou les portes arrières du véhicule pouvant être refermées sans difficulté.

Avantageusement, l'élément central précité supporte ou comprend un bloc cuisine équipé en particulier d'une table de cuisson.

Ce bloc cuisine se trouve donc à l'arrière du véhicule, et est au voisinage immédiat de la table et des bancs constitués par les éléments plans précités en position de service.

Selon diverses formes de réalisation de l'invention, les caissons longitudinaux précités supportent chacun un tiroir coulissant, dont le fond comprend un logement dans lequel est guidé et retenu un élément formant banc, ou bien ces caissons longitudinaux constituent eux-mêmes des volumes de rangement fermés en partie supérieure par des couvercles, et dont les fonds comprennent des logements dans lesquels sont guidés et retenus les éléments formant les bancs.

Un tiroir peut être monté coulissant entre l'élément formant plateau de table et le plancher du véhicule pour constituer un volume de rangement supplémentaire.

Selon encore une autre caractéristique de l'invention, l'élément central précité forme une partie d'un plan de couchage.

Une autre partie de ce plan de couchage peut être constituée par une série de lattes amovibles s'étendant entre les extrémités avant de l'élément central et des caissons longitudinaux, et les sièges ou la banquette avant du véhicule.

En variante, l'autre partie du plan de couchage est constituée par une banquette arrière du véhicule placée en position couchette.

Dans tous les cas, on obtient un plan de couchage, dont la surface est suffisante pour permettre à au moins deux personnes de s'étendre en position complètement allongée.

L'invention sera mieux comprise et d'autres détails et avantages de celle-ci apparaîtront plus clairement à la lecture de la description qui suit, faite à titre d'exemple en référence aux dessins annexés, dans lesquels:

- la figure 1 est une vue partielle en perspective arrière de l'ensemble d'éléments selon l'invention installé dans un véhicule;
- la figure 2 est une vue partielle de côté représentant l'ensemble des éléments selon l'invention;
- la figure 3 représente en perspective une partie des moyens de guidage et de verrouillage en position de la banquette arrière du véhicule;
- la figure 4 représente schématiquement le montage en porte-à-faux du plateau de table et d'un banc;
- la figure 5 représente schématiquement, en perspective, une variante de réalisation de l'invention.

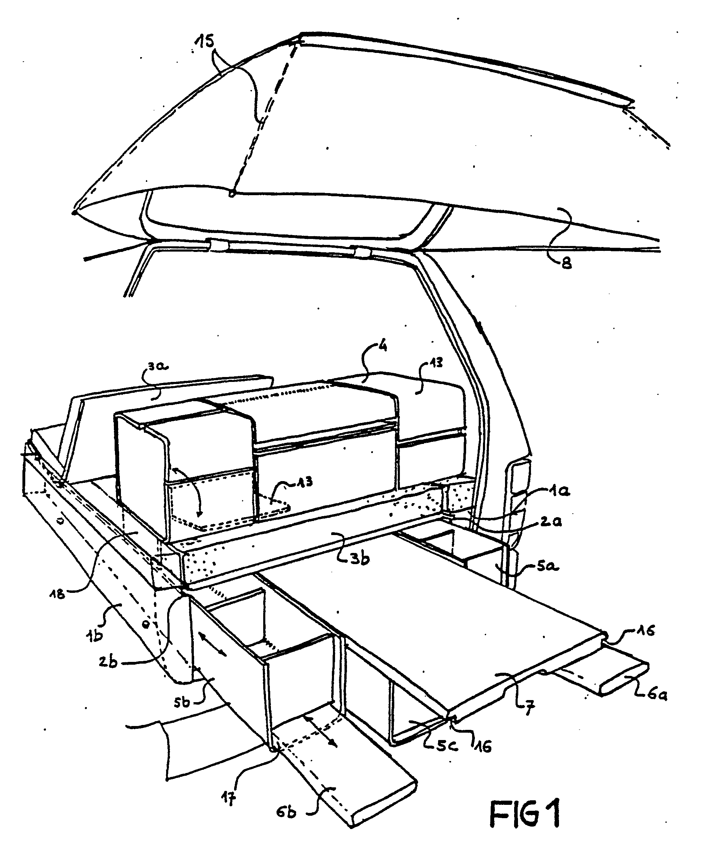

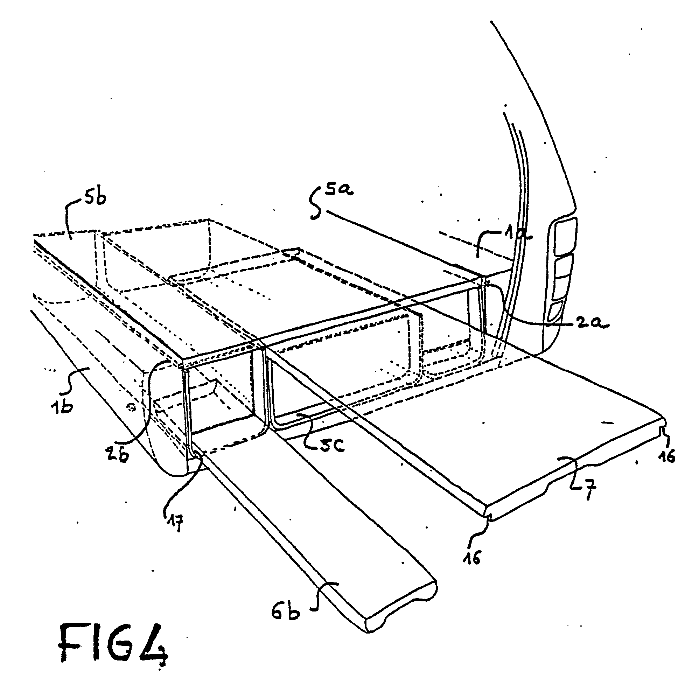

On se réfère d'abord aux figures 1 à 4 représentant une première forme de réalisation de l'invention, appliquée à un véhicule du type mini-fourgon dont l'ouverture arrière est fermée par un hayon et qui comprend soit deux sièges avant, soit une banquette avant, une banquette intermédiaire correspondant à la banquette arrière d'un véhicule de tourisme, et une banquette arrière supplémentaire, du type amovible.

L'ensemble d'éléments d'aménagement selon l'invention comprend tout d'abord deux caissons longitudinaux 1a et 1b, destinés à être placés horizontalement sur le plancher du véhicule, le long des côtés de celui-ci.

Ces caissons longitudinaux sont munis de moyens de fixation au plancher du véhicule et comprennent des rails ou glissières de guidage 2a, 2b, dans lesquels coulisse un élément 3b pourvu de moyens de verrouillage en position. Comme on le voit notamment en figure 1, l'élément 3b, maintenu à l'horizontale par les rails ou glissières des caissons longitudinaux forme, avec le plancher du véhicule, une sorte de caisson parallélépipédique rigide dans lequel viennent se loger les éléments coulissants suivants:

- un élément médian 5c, formant tiroir, qui reçoit à sa partie supérieure un plateau horizontal 7 en matériau résistant, par exemple en bois plastifié, qui comprend des rainures 16 sur ses côtés longitudinaux pour permettre son coulissement d'avant en arrière sur les bords longitudinaux supérieurs de l'élément 5c qui le supporte;

- deux éléments plus petits 5a et 5b, formant tiroirs à plusieurs compartiments, et dont le fond comprend un logement 17 de guidage en coulissement de deux éléments plans 6a et 6b en matériau résistant.

Ces éléments plans 6a, 6b et le plateau 7, lorsqu'ils sont tirés en arrière, s'étendent en porte-à-faux à l'extérieur du véhicule, et constituent une table et deux bancs placés de part et d'autre de cette table.

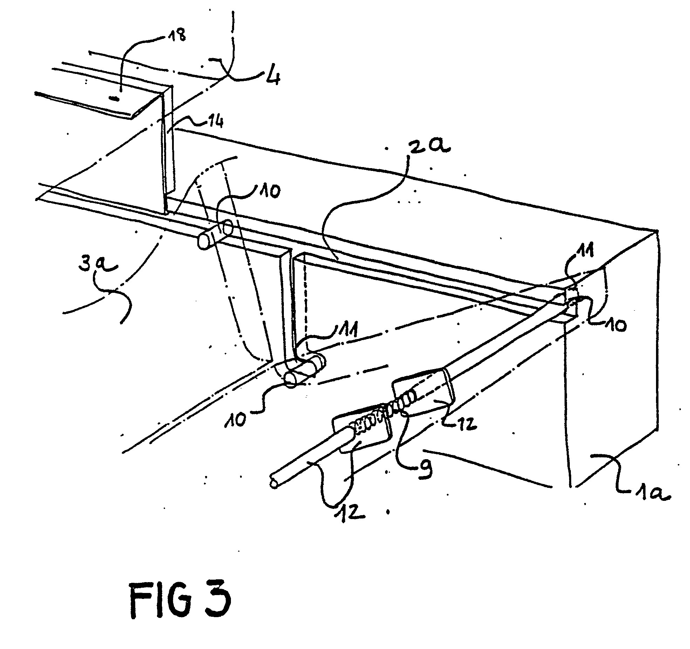

Dans l'exemple de réalisation représenté, l'élément central 3b est constitué par la banquette arrière supplémentaire du véhicule, qui a été placée en position horizontale. Cette banquette arrière 3b et la banquette intermédiaire 3a comprennent chacune un siège et un dossier reliés entre eux par des charnières et peuvent être utilisées soit en position relevée ou position normale, soit en position horizontale ou position couchette. Les côtés des banquettes 3a, 3b comprennent des tétons 10 engagés dans les glissières 2a et 2b des caissons longitudinaux 1a, 1b (figure 3). Les glissières 2a et 2b, dont la majeure partie est horizontale, comprennent aux endroits voulus des parties verticales s'étendant vers le bas et se terminant par des logements 11 dans lesquels les tétons 10 peuvent être engagés, par exemple en étant poussés par des ressorts, pour verrouiller les banquettes en position. Deux tétons transversalement alignés d'une même partie d'une banquette peuvent être reliés entre eux par un système de tiges et de plaquettes 12 entre lesquelles sont interposés deux ressorts 9, ce qui permet, d'une seule main, de raprocher les tétons 10 l'un de l'autre et de les faire sortir des logements 11 pour déplacer la banquette entre sa position relevée ou position normale, et sa position horizontale ou position couchette.

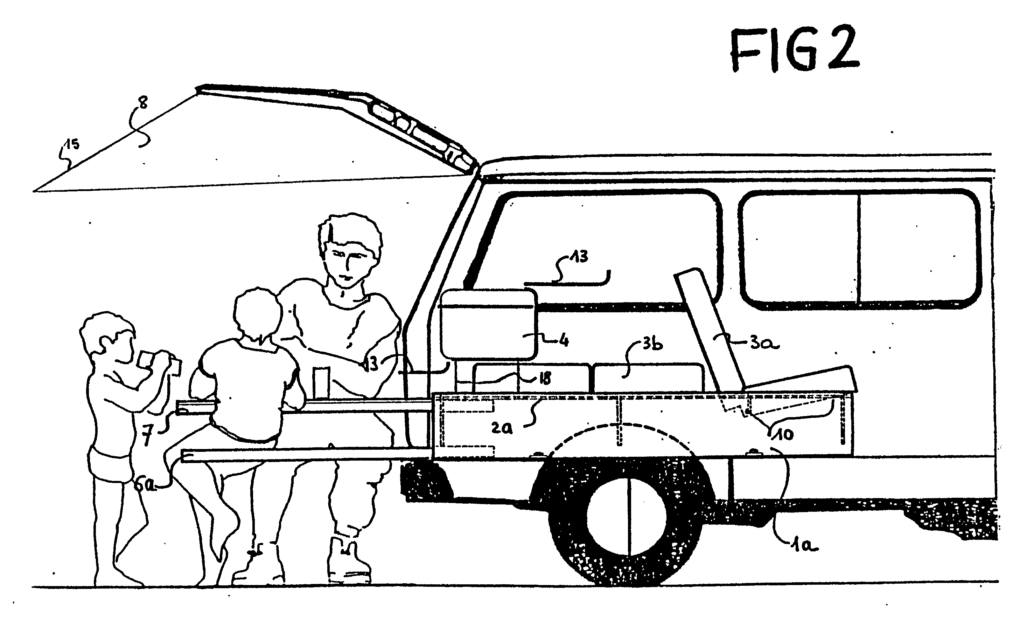

L'ensemble d'éléments selon l'invention comprend encore un élément 4, formant un bloc cuisine, qui est supporté par les caissons longitudinaux 1a, 1b, au moyen d'un système de guidage comprenant par exemple, sur chaque côté de l'élément 4, une cornière 18 dont une aile horizontale est engagée dans la glissière correspondante 2a ou 2b, et une plaque de butée 14, solidaire de la cornière 18 et prenant appui sur la face supérieure du caisson longitudinal correspondant. L'élément 4 peut donc être monté en place en étant introduit par l'arrière du véhicule. Des moyens de blocage appropriés permettent de le maintenir en position et d'éviter son déplacement par coulissement dans les glissières 2a, 2b. On voit, sur les figures 1 et 2, que la banquette arrière supplémentaire 3b prend place, en position horizontale, sous l'élément 4.

Le bloc cuisine constitué par l'élément 4 comprend un certain nombre d'équipements, tels qu'une plaque de cuisson, des compartiments de rangement d'un réservoir ou d'une bouteille de gaz combustible, de vaisselle et d'ustensiles de cuisine, une glacière, une réserve d'eau, un tiroir formant évier, et des compartiments de rangement de bouteilles. La fermeture de ces compartiments est assurée par un ensemble de rabats 13 conformés en équerre et maintenus en position ouverte ou fermée par des moyens appropriés. En position ouverte, ces rabats constituent des tablettes horizontales soutenues par appui de leur aile proche de leur axe de pivotement sur la partie adjacente du meuble.

L'élément 4 peut également être équipé de deux poignées latérales facilitant sa manipulation et sa mise en place.

Enfin, une toile 8 en matière souple peut être fixée au hayon du véhicule par une armature 15 montée directement ou indirectement sur le hayon, et constitue alors un auvent ou un parasol recouvrant la table et les bancs.

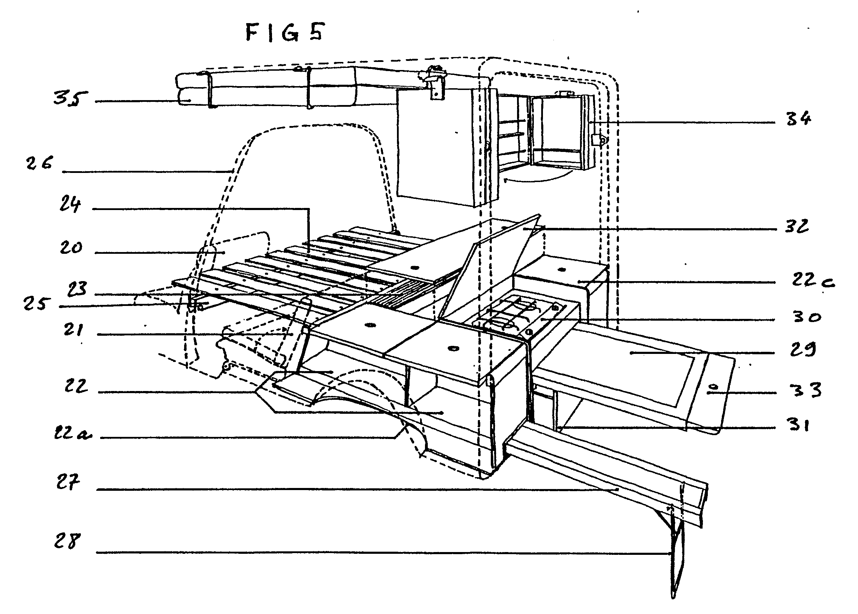

On se réfère maintenant à la figure 5, qui représente une variante de réalisation de l'invention applicable à un véhicule de type mini-fourgon comprenant deux sièges avant 20 ou une banquette avant, et une banquette arrière 21 dont le dossier est rabattable vers l'avant, sur le siège.

Dans cette variante de réalisation, l'ensemble d'éléments coordonnés selon l'invention comprend deux caissons longitudinaux 22 placés sur le plancher du véhicule en arrière de la banquette 21 et dont la face extérieure comprend une découpe 22a s'emboîtant sur le bouclier de passage de la roue arrière correspondante. Chaque caisson longitudinal 22 comprend par exemple deux compartiments profonds fermés en partie supérieure par des couvercles 22c pivotants ou amovibles, dans lesquels peuvent être placés une réserve d'eau, des accessoires de cuisine, des sacs de couchage, de vêtements, etc.... Un caisson central 23 prend place entre les deux caissons longitudinaux 22 et permet, entre autres, de maintenir l'ensemble en position, sans fixation particulière à la carosserie. Le caisson 23 comprend par exemple deux compartiments, fermés en partie supérieure par un couvercle amovible, l'un de ces compartiments servant au rangement d'objets divers, tandis que l'autre est utilisé pour le rangement de lattes destinés à former une partie d'un plan de couchage. Ces lattes, réalisées par exemple en hêtre, peuvent être montées amoviblement, par une extrémité, sur les extrémités avant des caissons longitudinaux 22 et du caisson central 23 et, par leur autre extrémité sur une traverse 25 dont les deux extrémités peuvent être engagées dans des orifices de l'arceau 26 de la cabine avant du véhicule. Lorsque les lattes 24 forment une partie du plan de couchage comme représenté en figure 5, le dossier de la banquette arrière 21 est rabattu sur le siège de cette banquette, tandis que les sièges avant 20 du véhicule sont avancés au maximum vers l'avant.

Les fonds des caissons longitudinaux 22 forment les moyens de guidage et de rangement de deux bancs coulissants 27, dont l'extrémité arrière comprend éventuellement un pied repliable 28. Le plateau coulissant 29 formant la table est monté entre une table de cuisson 30 et un grand tiroir inférieur 31 à plusieurs compartiments. La partie supérieure de la table de cuisson peut être protégée par un couvercle pivotant 32 qui, en position horizontale, est sensiblement au niveau des couvercles 22c des caissons longitudinaux 22 et du couvercle du caisson central 23, de sorte que ces couvercles forment avec les lattes 24 un plan de couchage de dimensions importantes.

Le plateau 29 de la table peut être prolongé par un rabat 33 relevable en position verticale pour venir se placer immédiatement en dessous du bord arrière du couvercle 32 et enfermer complètement la table de cuisson 30.

Ce rabat 33 peut comprendre un trou central facilitant sa manipulation et permettant également le passage du piquet d'un parasol.

Deux petits placards 34 peuvent être suspendus sous la partie arrière du toit du véhicule, en étant par exemple accrochés aux montants ou aux longerons de la carosserie, et peuvent être équipés de rangements pour des bouteilles, de la vaisselle, des ustensiles de cuisine, etc....

Un matelas 35 en deux éléments repliables l'un sur l'autre est maintenu contre le toit du véhicule par des sangles élastiques munies de crochets à leurs extrémités.

En variante, les lattes 24 formant la partie avant du plan de couchage peuvent être remplacées par une série de panneaux transversaux articulés, dépliables horizontalement depuis l'extrémité avant du caisson central 23 quand le dossier de la banquette arrière est rabattu à plat, et repliables les uns sur les autres pour être rangés entre le dossier de la banquette arrière relevé en position verticale et l'extrémité avant du caisson 23.

Par ailleurs, les deux caissons longitudinaux et l'élément central peuvent être constitués par un bloc unique comprenant des compartiments correspondant aux caissons longitudinaux et à l'élément central, et sur ses côtés des moyens d'appui sur les flancs de la carosserie pour assurer son maintien en position.

## Revendications

1. Ensemble d'éléments coordonnés permettant la transformation d'un véhicule du type mini-fourgon à ouverture arrière en auto-caravane, caractérisé en ce qu'il comprend deux caissons longitudinaux (1a, 1b, 22) destinés à être placés le long des côtés du véhicule et un élément central (3b, 23, 30, 31) placé entre les caissons longitudinaux et les reliant entre eux, des éléments plans (6a, 6b, 7, 27, 29) étant montés coulissants par rapport aux caissons longitudinaux et à élément central précité pour être déplacables entre une position de rangement où ils sont escamotés à l'intérieur du véhicule et une position de service où ils s'étendent à l'arrière du véhicule extérieurement à celui-ci et constituent le plateau d'une table (7, 29) et deux bancs (6a, 6b, 27) placés de part et d'autre de ce plateau.

2. Ensemble selon la revendication 1, caractérisé en ce que les éléments (6a, 6b, 7, 27, 29) formant le plateau de table et les bancs s'étendent, en position de service, en porte-à-faux à l'extérieur du véhicule.

3. Ensemble selon la revendication 1 ou 2, caractérisé en ce que l'élément central (3b, 23) supporte ou comprend un bloc cuisine (4), équipé en particulier d'une table de cuisson (30).

4. Ensemble selon l'une des revendications 1 à 3, caractérisé en ce que les caissons longitudinaux (1a, 1b) supportent chacun un tiroir coulissant (5a, 5b) dont le fond comprend un logement (17) dans lequel est guidé et retenu un élément (6a, 6b) formant banc.

5. Ensemble selon l'une des revendications 1 à 3, caractérisé en ce que les caissons longitudinaux (22) constituent des volumes de rangement fermés en partie supérieure par des couvercles (22c) et dont les fonds comprennent des logements dans lesquels sont guidés et retenus les éléments (27) formant les bancs.

6. Ensemble selon l'une des revendications 1 à 5, caractérisé en ce qu'il comprend un tiroir (5c, 31) monté coulissant entre l'élément (7, 29) formant plateau de table et le plancher du véhicule.

7. Ensemble selon l'une revendications précédentes, caractérisé en ce que l'élément central (3b, 23) forme une partie d'un plan de couchage.

8. Ensemble selon la revendication 7, caractérisé en ce qu'une autre partie du plan de couchage est constituée par une série de lattes amovibles (24) s'étendant entre les extrémités avant de l'élément central (23) et des caissons longitudinaux (22), et les sièges ou la banquette avant (20) du véhicule.

9. Ensemble selon la revendication 7, caractérisé en ce qu'une autre partie du plan de couchage est constituée par une banquette arrière (3a) du véhicule, placée en position couchette.

10. Ensemble selon la revendication 9, caractérisé en ce que l'élément central (3b) précité est constitué par une banquette arrière supplémentaire, qui, ainsi que la banquette arrière (3a) précitée, et supporté par des moyens de guidage (2a, 2b) prévus sur les caissons longitudinaux (1a, 1b).

**Claims**

1. Group of elements permitting the transformation of a small van with a rear door into a camping-car caracterised by 2 longitudinal boxes (1a, 4121b, 22) to be placed along the length of the vehicle and a central element (3b, 23, 30, 31) placed between the longitudinal boxes joining them together, flat elements (6a, 6b, 7, 27, 29) sliding in the longitudinal boxes and the central element which can be moved from the storage position which is concealed at the rear of the van and a service position which is pulled out to the exterior of the vehicle and forms the table top (7-29) and two benches (6a, 6b, 27) placed on each side.

2. Group of elements according to the 1st revendication, caracterised in that the elements (6a, 6b, 7, 27, 29) forming the table top and the alongsidi benches, are pulled out in the service position, outside the vehicle.

3. Group of elements according to the revendication 1 or 2 caracterised in that the central element (3b, 23) holds up and contains a kitchen block (4) mainly equipped with a cooking table (30).

4. Group of elements according to the revendications 1 to 3 caracterised in that the longitudinal boxes (1a, 1b) are equiped with a sliding chamber (5a, 5b) in which the elements forming the benches (6a, 6b) are guided and held.

5. Group of elements according to the revendications 1 to 3 caracterised in that the longitudinal boxes (22) form closed volumes with lids for storage (22c) and whose base contains lodgings in which the elements forming the benches (27) are guided and held.

6. Group of elements according to one of the revendications 1 to 5 caracterised in that it contains a drawer (54, 31) sliding between the element (7, 29) forming the table top and the floor of the vehicle.

7. Group of elements according to one of the preceding revendications caracterised in that the central element (3b, 23) forms a part of the sleeping plan.

8. Group of elements according to the revendication 7, caracterised in that other area of the sleeping plan is constituted with a number of movable slats (24) which are placed between the edge of the central element (23) and the longitudinal boxes (22) and the front seat of the vehicle.

9. Group of elements according to the revendication 7, caracterised in that another part of the sleeping plan is constituted with a rear seat (3a) of the vehicle placed in the sleeping position.

10. Group of elements according to the revendication 9, caracterised in that the above mentionned central element (3b) consists of a supplementary rear seat (3a) and held by guides (2a,2b) which are found on the longitudinal boxes (1a, 1b).

## Patentansprüche

1. Eine Zusammenstellung von Elementen ermöglicht den Umbau eines Fahrzeuges mit rückwärtiger Tür in einen Campingwagen, gekennzeichnet dadurch, dass zwei längliche Kisten (1a,1b,22) seitlich des Wagens angebracht werden und einem mittleren Element (3b,23,30,31), welches zwischen den beiden länglichen Elementen stehend, diese miteinander verbindet, darüber hinaus Flächenelemente (6a,6b,7,27,29), die gleitend zu den länglichen Kisten und dem vorhergenannten zentralen Element montiert sind, um zu variieren zwischen einer Ablageposition bei der sie ins Innere des Wagens verschwinden und einer Gebrauchsposition, wobei sie sich am hinteren Teil des Wagens nach aussen ausziehen lassen und eine Tischplatte (7,29) mit zwei beiderseitigen Bänken (6a,6b,27) bilden.

2. Eine Zusammenstellung wie unter Erläuterung 1, gekennzeichnet dadurch, dass die Elemente (6a,6b,7,27,29), die die Tischplatte und Bänke bilden, sich ausziehen lassen und in der Gebrauchsposition aussen am Wagen auskragen.

3. Eine Zusammenstellung wie unter Erläuterung 1 oder 2, dadurch gekennzeichnet, dass das mittlere Element (3b,23) eine Kochstelle (4) trägt oder beinhaltet, vorzugsweise mit einer Kochplatte ausgestattet.

4. Eine Zusammenstellung wie unter einer der Erläuterungen 1 bis 3, dadurch gekennzeichnet, dass die länglichen Kisten (1a,1b) jeweils eine Schublade (5a,5b) tragen, wobei dessen Boden ein Gestell (17) beinhaltet, indem ein Element (6a,6b) geführt und zurückgehalten wird, welches eine Bank bildet.

5. Eine Zusammenstellung wie unter einer der Erläuterungen 1 bis 3, dadurch gekennzeichnet, dass die länglichen Kisten (22) geschlossene Ablageräume im oberen Teil durch die Deckel (22c) bilden und der Boden Gestelle beinhaltet, in denen die Elemente geführt und zurückgehalten werden, die die Bänke bilden.

6. Eine Zusammenstellung wie unter einer der Erläuterungen 1 bis 5, dadurch gekennzeichnet, dass sie eine Schublade (5c,31) beinhaltet, welche gleitend zwischen dem Element (7,29), das die Tischplatte bildet und dem Wagenboden angebracht ist.

7. Eine Zusammenstellung wie unter einer der vorangegangenen Erläuterungen, dadurch gekennzeichnet, dass das zentrale Element (3b,23) einen Teil einer Schlaffläche bildet.

8. Eine Zusammenstellung wie unter Erläuterung 7, dadurch gekennzeichnet, dass ein zweiter Teil der Schlaffläche durch eine Reihe von beweglichen Latten (24) gebildet wird, die sich zwischen den äussersten Punkten vor dem zentralen Element (23) mit den länglichen Kisten (22) und den Vordersitzen (20) des Wagens ausbreiten.

9. Eine Zusammenstellung wie unter Erläuterung 7, dadurch gekennzeichnet, dass ein anderer Teil der Schlaffläche durch eine hintere Sitzreihe (3a) des Wagens in Liegestellung gebildet wird.

10. Eine Zusammenstellung wie unter Erläuterung 9, dadurch gekennzeichnet, dass das obengenannte zentrale Element (3b) durch eine zusätzliche hintere Bank gebildet wird, sowie die obengenannte hintere Sitzbank (3a) und getragen wirdmittels der Führungen (2a,2b), die auf den länglichen Kisten (1a,1b) vorgesehen sind.

FIG 1

FIG 2

FIG 3

FIG4

FIG 5